# EUROPEAN PATENT APPLICATION

(11) **EP 2 067 700 A1**
(43) Date of publication of application: **10.06.2009**
(21) Application number: 07254701.1
(22) Date of filing: 05.12.2007
(51) Int. Cl.: B65B 9/20, B65B 9/22

(54) **Method and apparatus for packaging product in a web**

(71) Applicant: Amcor Flexibles Transpac N.V., 1935 Zaventem (BE)
(72) Inventor: Freemantle, Stanley C., Purton Swindon Wiltshire SN5 4BE (GB)
(74) Representative: Hogg, Jeffery Keith

(57) **Abstract**

A method of packaging a product in a web material (10) comprises: feeding the web in an inclined feedpath (14) horizontally and downwardly beneath a product feeding station (21) ; periodically discharging measures of the product onto the downwardly inclined web at the feeding station; forming the outer peripheral edges of the web by forming plates (15, 16) into a tubular shape around the discharged product as the web is fed downwardly along the feedpath (14); sealing the outer peripheral edges of the web together by an edge sealer (17), and periodically forming cross seals by a cross sealer (23) in the tubular web between successive measures of product to package each. The upwardly facing opening of the web in the semi-formed state before becoming tubular, presents a larger opening to receive the discharged product. The downwardly inclined surface of the web onto which the product falls, serves to decelerate or break the fall of the product before it is fed with the moving web to the cross sealer (23).

## Description

### Technical Field

This invention relates to a method and apparatus for packaging a product in a web of material.

In a known packaging method, a web of film is formed into a tubular shape by a forming shoulder that brings the outer edges of the film together to be joined, and in so doing, directs the tube vertically downwards leaving an upwardly facing opening to receive the product. Successive measures of product are discharged into the tube and successive cross seals are formed laterally of the tube by closing the walls of the tube and sealing them together to form successive packages, each containing a measure of the product.

Problems with this known method include the large surface area of the forming collar and consequent fictional forces between it and the film. This requires the use of controlled friction films, causes wear of the collar that increases cost and downtime, and ultimately causes creases in the film due to uneven wear of the collar. Threading the end of a new length of film through the forming collar is also difficult and can result in jamming. Also, the drop height of the product from a product feeder and the cross seal is long, which allows the product to spread longitudinally when the product is particulate or granular in nature, especially if there is a variation in particle size. The frictional effect of the tubular film also makes the spreading effect worse. Spreading can cause the product to become trapped in the cross seals, but more significantly, it limits the speed at which the packaging process can be operated, that is, the cross seal can only be formed once a measure of product clears the cross sealer.

An object of the invention is to provide an improved method and apparatus for packaging product in a web of film.

### Summary of the Invention

According to the invention, a method of packaging a product in a web material comprises: feeding the web in an inclined feedpath horizontally and downwardly beneath a product feeding station; periodically discharging measures of the product onto the downwardly inclined web at the feeding station; forming the outer peripheral edges of the web into a tubular shape around the discharged product as the web is fed downwardly along the feedpath; sealing the outer peripheral edges of the web together, and periodically forming cross seals in the tubular web between successive measures of product to package each.

The upwardly facing opening of the web in the semi-formed state before becoming tubular, presents a larger opening to receive the discharged product compared with the fully formed tubular shape. Jamming of the product in the opening, known as "bridging" is therefore avoided.

The downwardly inclined surface of the web onto which the product falls, serves to decelerate or break the fall of the product before it continues to be fed with the moving web as the latter is formed into a tube and fed to the cross sealer.

Preferably, the feeding station has a product discharge opening spaced closely above the downwardly inclined web to limit the drop distance of the product onto the web. Also, the inclined nature of the web between the feeding station and the cross sealer effectively reduces the vertical drop height of the product. This reduces spreading of the product whilst in free-fall.

### Description of the Drawings

The invention will now be described by way of example with reference to the accompanying drawings in which:
Figure 1 is a schematic perspective view of a known packaging machine;
Figure 2 is a perspective schematic view of a packaging machine according to the invention;
Figure 3 is a side elevation of part of the machine of Figure 2;
Figure 4 is a more detailed view of the forming plates in Figure 3, and
Figure 5 shows an optional modification to the forming plates of Figure 4.

### Best Mode of Carrying out the Invention

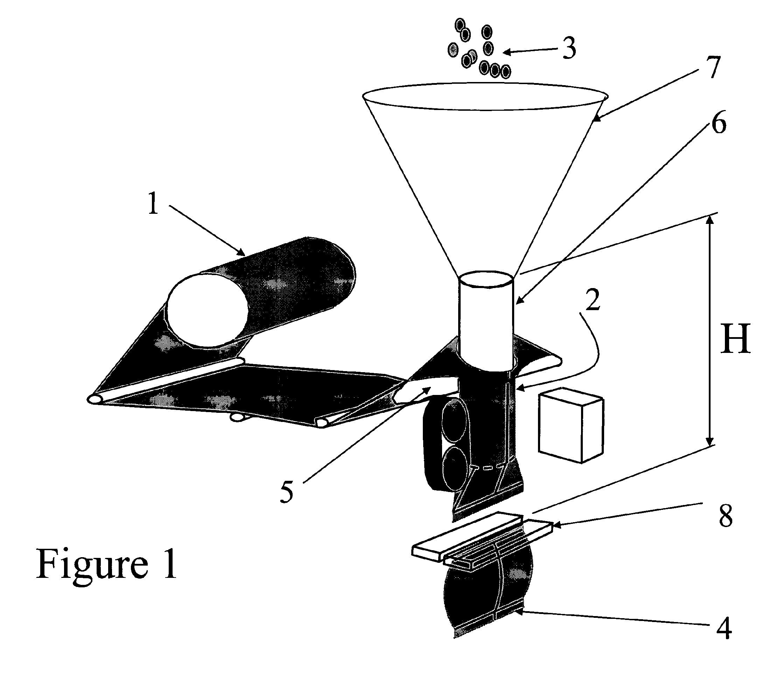

The packaging machine illustrated in Figure 1 is known as a vertical form fill seal (VFFS) machine. This machine forms a web of film 1 into a tube 2 which is orientated vertically so that successive measures of a product 3 can be discharged into the open upper end of the tube as it is formed, and successive cross seals 4 are then formed in the tube to package each measure of product between successive cross seals. A forming collar 5 is provided to form the flat web of film into a tubular shape. The collar 5 surrounds an upright tubular guide 6 around which the film 1 is formed into a tube and through which product 3 passes into the tube. The whole of the lower surface of the web 1 engages the collar 5 and the outer surface of the tube 2 as it is formed into the required tubular shape. Therefore, there is a large area of surface contact between the web and forming collar 5, and therefore significant frictional forces are created which cause wear of the collar. Worn collars can cause creasing of the film. Furthermore, there are difficulties in feeding the end of a new web 1 through the machine, when it is spliced by a tape to the end of the preceding web of film.

Another problem of this known VFFS machine is the long drop height H of the product between the product feeder 7 and the cross sealer 8. Whilst the discharge product is in free-fall, it tends to spread vertically, especially if the product is a particulate or granular product with particles of different sizes. The spread of product is also increased by contact with the side walls of the guide 6 through which it falls. As a result of the spread of the product, the speed at which the machine is operated has to be limited so as to ensure that each measure of product is contained within the required length of tubular web when the cross seals are formed. Typically, a VFFS machine is operated at a speed of 60 to 80 packages per minute, with an upper speed limit of 120 packages per minute.

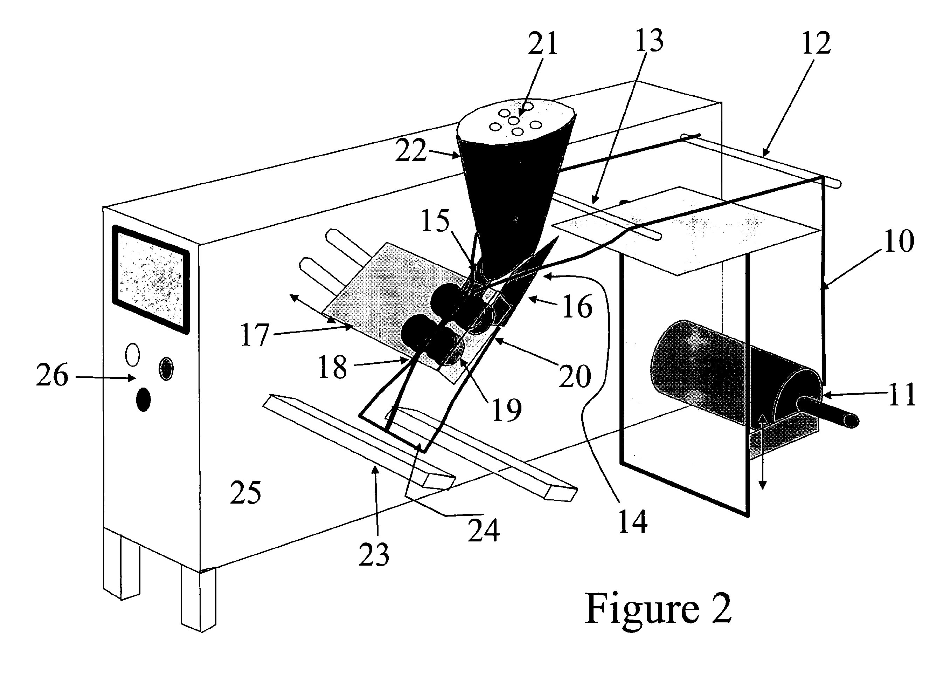

Figures 2 to 4 illustrate a packaging machine according to the invention in which a web of film 10 is formed into a tubular shape as it is fed along a downwardly inclined feedpath 14. The web of film 10 is taken from a roll 11 and up and over a first web guide 12 and horizontally onwards and over a second web guide 13. The web is then fed downwards along the inclined feedpath 14 between a pair of web forming plates 15, 16 that bring the outer peripheral edges of the web 10 upwards and together to form a tubular shape. The edges of the web 10 are then sealed together by an edge sealer 17 which seals the inner surfaces of the edges together in the form of a fin seal 18. The edge sealer 17 comprises a pair of heated wheels 19 which engage the edges of the web between them to form the seal 18. The wheels 19 rotate to form an edge seal continuously with the feed of the web. A second pair of wheels 20 is provided to engage the edges of the web slightly ahead of the heated wheels 19, and both sets of wheels 19, 20 serve to feed the web through the machine from the roll 11. The wheels 19, 20 may be driven through gears by a d.c. motor drive, and power supplied through slip rings to heat the wheels 19 in a known manner. Tension of the web may be controlled using a pretension system between the roll 11 and the forming plates 15, 16. For higher speeds of operation, a second pair of heated wheels may be provided like the wheels 19 to ensure that a good edge seal 18 is obtained. Additionally or alternatively, the wheels 20 may also be heated.

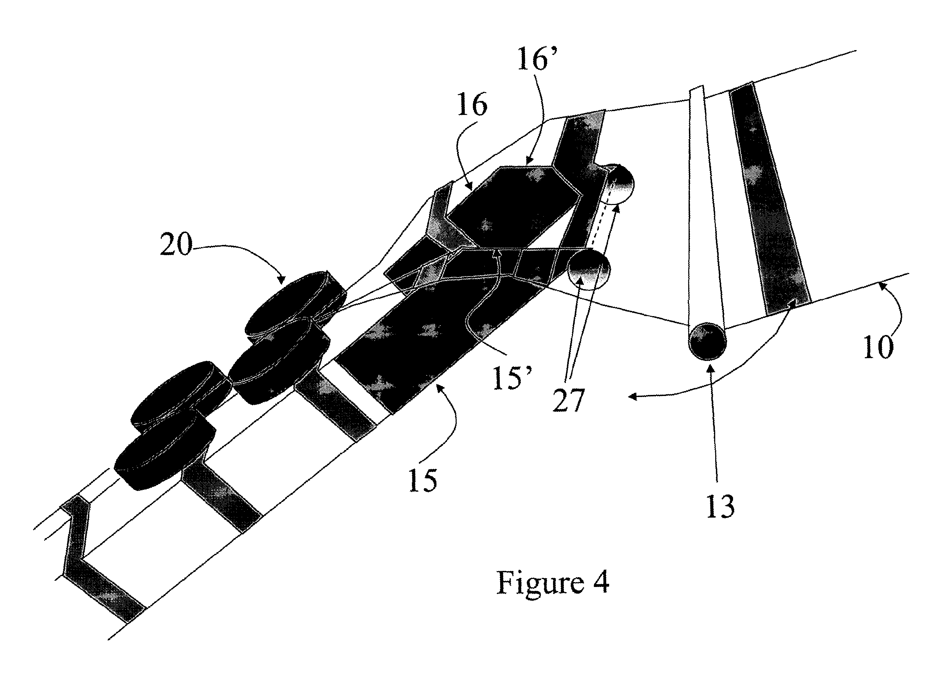

The manner in which the web 10 is formed into a tube by the forming plates 15, 16 is shown more clearly in Figure 4. The web 10 is shown with a series of lateral stripes printed on it which serve to highlight the cross sectional profile of the web at different stages. The web 10 is drawn between the forming plates 15, 16 by virtue of their position relative to the web guide 13 and the feed wheels 20 of the edge sealer 17. The position of the guide 13 is preferably adjustable in height to allow the angle of the web to be adjusted as it is fed through the forming plates 15, 16. The inner faces of the forming plates 15, 16 engage the peripheral portions of the web to fold them upwards. The leading edges 15', 16' of the forming plates are tapered to conform to the longitudinal path of the web 20 as it is folded between the forming plates. If preferred, a further web guide 27 may be provided at the extreme ends of the tapered edge 15', 16', either in the form of a pair of wheels or a lateral roller.

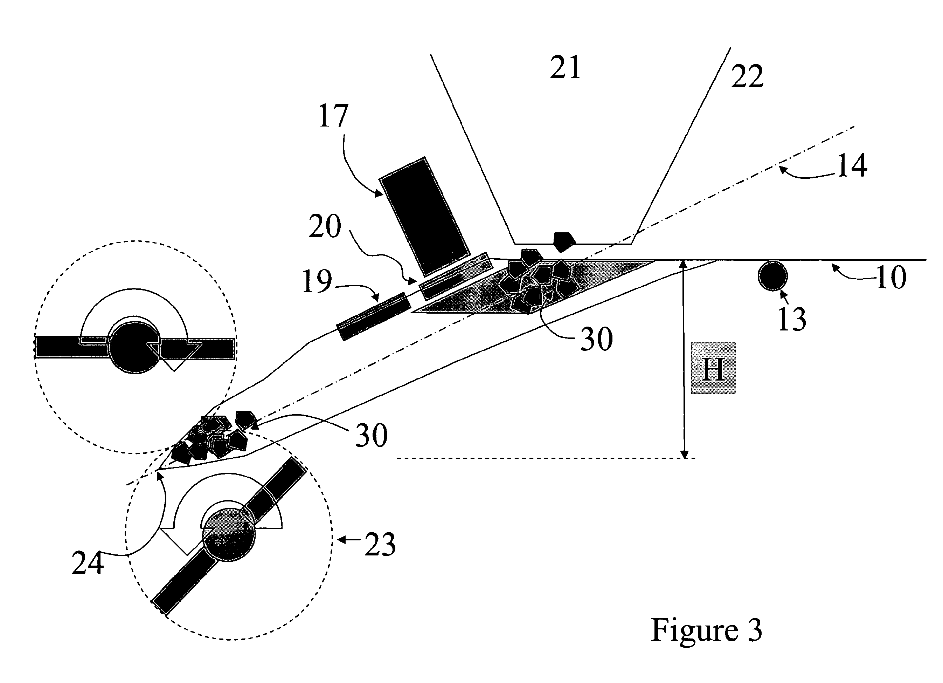

A product feeder 21 is provided comprising a hopper or discharge nozzle 22, the lower end of which is located above and between the forming plates 15, 16 as shown in Figure 3, close enough to reduce as far as possible the distance between the lower end of the hopper 22 and the inclined web below it. The product feeder periodically discharges successive measures of product 30 from the hopper 22 onto the web, and each measure travels with the film past the edge sealer 17 to a cross sealer 23. The cross sealer is preferably a rotary type of cross sealer which serves to periodically pinch together opposite walls of the tubular web and seal them together to close the tube. Successive cross seals 24 serve to form a sealed package with a measure of product confined in the tubular web between them. Individual packages are then separated from the web by a web cutting process that can be integrated with the cross sealer 23 or which follows it.

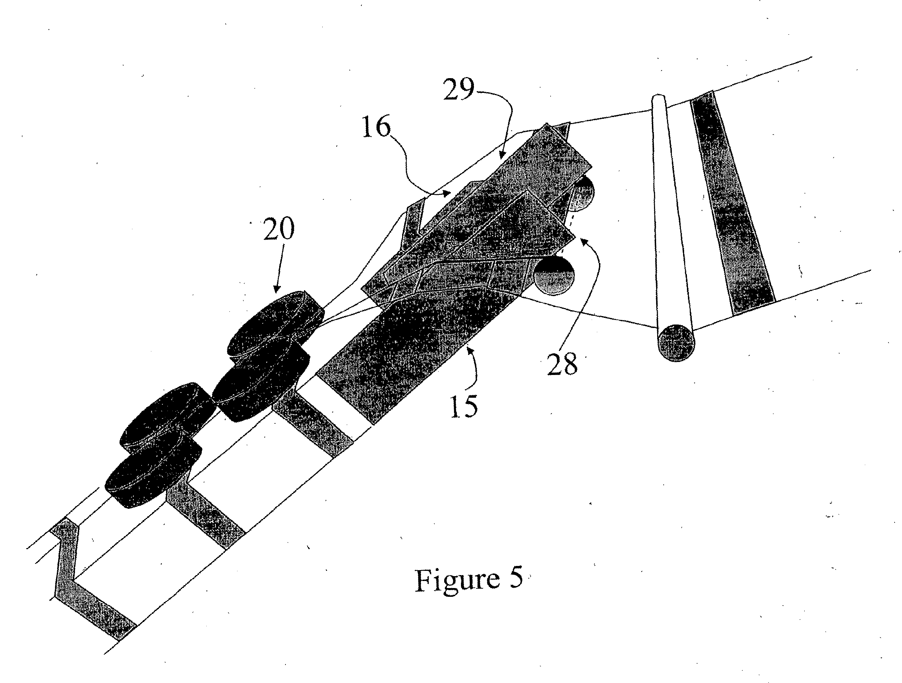

In an alternative embodiment of the invention illustrated in Figure 5, a further pair of forming plates 28, 29 is provided between the forming plates 15, 16 so that the peripheral portion of the web each side of its centreline passes between a pair of plates 15, 28 and 16, 29 and the inner plates 28, 29 define a tubular box shape of fixed width for forming the web. The lower end of the hopper 22 may be located between the inner pair of plates 28, 29.

The plates 15, 16 or pairs of plates 15, 28; 16, 29 may be laterally adjustable relative to one another to accommodate different width webs 10 and tubes as formed from the web.

It will be appreciated from Figure 3 that the drop height H between the lower end of the hopper 22 and the cross sealer 23 is much smaller than the drop height of the known VFFS machine because of the inclined nature of the web feedpath 14 and the close proximity of the hopper 22 to the web and forming plates 15, 16. A reduction in drop height from about 1 metre to 500mm is possible with a corresponding increase in packaging speed in terms of packages per minute.

The main components of the packaging machine including the web guides 12, 13, the web forming plates 15, 16, the edge sealer 17 and the cross sealer 23 are all mounted on one side of a machine frame 25 so that they are all readily accessible from the same side for ease of operation and maintenance. A machine control interface 26 is also provided on the frame 25.

## Claims

1. A method of packaging a product in a web material comprising:
a) feeding the web in an inclined feedpath horizontally and downwardly beneath a product feeding station;
b) periodically discharging measures of the product onto the downwardly inclined web at the feeding station;
c) forming the outer peripheral edges of the web into a tubular shape around the discharged product as the web is fed downwardly along the feedpath;
d) sealing the outer peripheral edges of the web together, and
e) periodically forming cross seals in the tubular web between successive measures of product to package each.

2. A method as claimed in claim 1 in which the feeding station has a product discharge opening spaced closely above the downwardly inclined web to limit the drop height of the product onto the web.

3. A method as claimed in claim 1 or 2 in which the outer edges of the web are each engaged by a forming plate that guides the edge upwards to form the tubular shape.

4. A method as claimed in claim 3 in which the two forming plates are adjustable laterally of the web to accommodate different widths of web.

5. A method as claimed in any one of the preceding claims in which the outer edges of the web are sealed together by a continuous process.

6. A method as claimed in claim 5 in which the seal formed between the outer edges of the web is a fin seal with inner surfaces of the web sealed together face-to-face.

7. A method as claimed in any one of the preceding claims in which the cross seals are formed while the web continues to be fed along the feedpath.

8. Apparatus for packaging a product in a web of material comprising:
a) a web feeder that feeds the web in an inclined feedpath extending longitudinally and downwardly beneath a product feeding station;
b) a product feeder at the feeding station that periodically discharges measures of product onto the downwardly inclined web;
c) a forming plate arranged in the feedpath of the web to bring outer peripheral edges of the web upwards and together to form a tubular shape around the discharged product as the web is fed downwards along the feedpath;
d) an edge sealer that seals the outer peripheral edges of the web together, and
e) a cross sealer that periodically forms cross seals in the tubular web between successive measures of product to package each.

9. Apparatus as claimed in claim 8 in which the product feeder has a product discharge opening spaced closely above the downwardly inclined web.

10. Apparatus as claimed in claim 8 or 9 in which the outer edges of the web are each engaged by a forming plate that guides the edge upwards to form the tubular shape.

11. Apparatus as claimed in claim 10 in which the two forming plates are adjustable laterally of the web to accommodate different widths of web.

12. Apparatus as claimed in claim 11 in which two pairs of forming plates are provided, each pair to receive a respective portion of the web between it to guide the film in forming the tubular shape.

13. Apparatus as claimed in any one of claims 8 to 12 in which the edge sealer seals the outer edges of the web together by a continuous process.

14. Apparatus as claimed in claim 13 in which the edge sealer forms a fin seal with inner surfaces of the web sealed together face-to-face.

15. Apparatus as claimed in any one of claims 8 to 14 in which the cross sealer is such as to form cross seals while the web continues to be fed along the feedpath.

16. Apparatus as claimed in any one of claims 8 to 15 in which the web feeder is such as to feed the web in a feedpath with a horizontal section leading into the downwardly inclined section of the feedpath.

17. Apparatus as claimed in any one of claims 8 to 16 in which the web feeder, product feeder, forming plate and cross sealer are all mounted on a machine frame that allows access to all of them from one side of the machine frame.

18. Apparatus for forming packaging from a web of material comprising a pair of forming plates that in use is arranged to bring outer peripheral edges of the web upwards and together to form a tubular shape around a product discharged onto the web as it is fed over the forming plates beneath a feeding station, the forming plates being inclined in use to extend horizontally and downwardly beneath the feeding station in the direction of web feed.

19. Apparatus as claimed in claim 18 comprising two forming plates adjustable laterally of the web to accommodate different widths of web, each plate serving to bring a respective peripheral edge of the web upwards to meet the other edge.

20. Apparatus as claimed in claim 18 or 19 further comprising a product feeder to discharge product onto the web above the forming plate.
